# EUROPÄISCHE PATENTSCHRIFT

(11) **EP 2 695 799 B1**
(45) Veröffentlichungstag und Bekanntmachung des Hinweises auf die Patenterteilung: **09.05.2018**
(21) Anmeldenummer: 13003953.0
(22) Anmeldetag: 08.08.2013
(51) Int. Cl.: B62D 53/02

(54) **Pendel-/knickgelenkte Baumaschine**
Pendulum/articulated construction machine
Machine de construction à direction pendulaire / à pivot

(30) Priorität: 10.08.2012 DE 102012015888
(43) Veröffentlichungstag der Anmeldung: 12.02.2014
(73) Patentinhaber: BOMAG GmbH, 56154 Boppard (DE)
(72) Erfinder: Brenner, Hagen, 56154 Boppard (DE); Perscheid, Michael, 56332 Dieblich (DE)
(74) Vertreter: Heidler, Philipp

(56) Entgegenhaltungen:
- EP-A1- 0 504 607
- EP-A1- 2 384 913
- US-A- 3 032 135
- US-A- 3 244 249
- US-A- 3 672 460

## Beschreibung

Die Erfindung betrifft eine pendel-/knickgelenkte Baumaschine mit einem Vorderwagen und einem Hinterwagen, die über ein Pendel-/Knickgelenk miteinander verbunden sind, und welche das Pendel-/Knickgelenk frei tragend überbrückende Hydraulikschläuche zwischen dem Vorderwagen und dem Hinterwagen aufweist, wobei die Hydraulikschläuche an beiden Seiten der Überbrückungsstelle ortsfest fixiert sind.

Derartige pendel-/knickgelenkte Baumaschinen sind allgemein bekannt. Die das Pendel-/Knickgelenk überbrückenden Hydraulikschläuche müssen die Bewegungen des Vorderwagens und des Hinterwagens ausgleichen können, da sonst eine Beschädigung der Hydraulikschläuche eintreten kann. Es treten dabei oft Schwierigkeiten bei der Überbrückung des Pendel-/Knickgelenks an den Hydraulikschläuchen auf, da die Hydraulikschläuche einer Torsion unterliegen, wenn der Vorderwagen und der Hinterwagen zum Beispiel bei einer Kurvenfahrt der Baumaschine oder bei einer Pendelbewegung gegeneinander winkelversetzt oder verdreht werden. Eine gattungsgemäße Pendel-/knickgelenkte Baumaschine ist aus der US 3 032 135 A bekannt.

Das Problem tritt bei Baumaschinen weniger stark auf, bei welchen die Hydraulikschläuche in einer Ebene über das Pendel-/Knickgelenk geführt werden. Hierbei unterliegen die Hydraulikschläuche keiner starken Torsion. Wenn jedoch die Hydraulikschläuche nicht in einer Ebene über das Pendel-/Knickgelenk geführt werden, d.h. wenn die Hydraulikschläuche zum Beispiel auf dem Vorderwagen der Baumaschine höher installiert sind als auf dem Hinterwagen, tritt das Torsionsproblem besonders stark auf.

Die bisherigen Konstruktionen zur Befestigung der Hydraulikschläuche haben jedoch den Nachteil, dass die Hydraulikschläuche bei den Relativbewegungen des Vorderwagens und des Hinterwagens zueinander zwar den Bewegungen folgen können, jedoch sich dabei verdrehen und unter weiterer Krafteinwirkung eventuell sogar beschädigt werden. Die Hydraulikschläuche können nur in geringem Maße Torsion aufnehmen. Es sollte daher eine Torsion der Hydraulikschläuche möglichst vermieden werden.

Es ist daher Aufgabe der Erfindung, eine Baumaschine der eingangs genannten Art bereitzustellen, bei welcher die Hydraulikschläuche nicht durch Torsion beschädigt werden können.

Diese Aufgabe wird dadurch gelöst, dass die Hydraulikschläuche auf einer Seite der Überbrückungsstrecke mit einer Fixiereinrichtung bezüglich einer rotatorischen und axialen Bewegung fixiert sind, und auf der anderen Seite mit einer Schlauchsicherung in axialer Richtung fixiert und rotatorisch frei beweglich sind, und dass die Hydraulikschläuche auf der der Fixiereinrichtung abgewandten Seite der Führungseinrichtung eine vorgegebene Ausgleichslänge aufweisen, in welcher sie sich ungehindert in sich verdrehen können, um eventuelle Torsionsbewegungen über diese Ausgleichslänge verteilen zu können.

Es wird auf diese Weise eine Baumaschine bereitgestellt, bei der die Hydraulikschläuche an einer Seite der Überbrückungsstelle keine Torsionskräfte aufnehmen können. Dies bedeutet, dass im Bereich der Führungseinrichtung keine Torsionskräfte entstehen, die auftreten würden, wenn die Hydraulikschläuche auf beiden Seiten der Überbrückungsstrecke rotatorisch fest eingespannt oder festgeklemmt wären. Vorhandene Torsionskräfte in den Hydraulikschläuchen werden mit der Führungseinrichtung weitergeleitet und verteilt, so dass sich die Torsionskräfte auf die Ausgleichslänge der Hydraulikschläuche verteilen können. Die Führungseinrichtung stellt eine Fixierung der Hydraulikschläuche in Axialrichtung sicher. Somit werden die Hydraulikschläuche durch die Führungseinrichtung ortsfest gehalten und können sich in ihre Axialrichtung nicht bewegen. Andererseits wird dadurch sichergestellt, dass sich der Längenabschnitt der Hydraulikschläuche in der Überbrückungsstrecke nicht verändert. Folglich erfüllt die Führungseinrichtung zwei Funktionen in Bezug auf eine Bewegung der Hydraulikschläuche. Im Bereich der Führungseinrichtung können sich die Hydraulikschläuche rotatorisch, das heißt in Umfangsrichtung der Hydraulikschläuche bewegen, nicht aber in Axialrichtung, das heißt in Längsrichtung der Hydraulikschläuche, und die Schlauchlänge in der Überbrückungsstelle bleibt konstant. Die Führungseinrichtung sichert eine definierte Lage der Hydraulikschläuche in dem Überbrückungsbereich bei gleichzeitiger möglicher Bewegungsfreiheit der Hydraulikschläuche.

Die Fixiereinrichtung hat eine andere Funktion im Vergleich zu der Führungseinrichtung. Mit der Fixiereinrichtung werden keine Torsionskräfte weitergeleitet, da an der Fixiereinrichtung die Hydraulikschläuche sowohl rotatorisch wie auch axial festgehalten werden, beispielsweise durch eine Schlauchschelle, die die Hydraulikschläuche an ihrem Umfang fixiert.

Die axiale Fixierung bei gleichzeitiger rotatorischer Freiheit der Hydraulikschläuche kann durch formschlüssige Fixiermittel erfolgen. Auf eine einfache Weise wird ein Formschluss durch einen oder mehrere Anschläge auf den Hydraulikschläuchen hergestellt, welche mit korrespondierenden fahrzeugseitigen Cegenanschlägen zusammenwirken. Die Anschläge und Gegenanschläge können beispielsweise durch die Kombination einer Nut und eines korrespondierenden Anschlags bereitgestellt werden.

Die Ausführungsform mit einer Positioniernut ist besonders zweckmäßig. Eine Positioniernut ist ein einfaches Mittel, um eine axiale Fixierung bei gleichzeitiger Möglichkeit einer Torsionsbewegung der Hydraulikschläuche bereitzustellen. Zur Ermöglichung von Rotationsbewegungen in der Führungseinrichtung kann beispielsweise am Umfang oder am Teilumfang der Hydraulikschläuche ein Vorsprung vorhanden sein, beispielsweise in Form eines umlaufenden Wulstes, der mit einer fahrzeugseitigen Positioniernut zusammenwirkt. Hierbei verhindert die Positioniernut, dass sich der Vorsprung in Längsrichtung der Hydraulikschläuche bewegen kann. Da der Vorsprung fest mit den Hydraulikschläuchen verbunden ist, beispielsweise durch Kleben, Verschweißen oder Schrumpfen, können sich auch die Hydraulikschläuche in ihrer Längsrichtung nicht bewegen. Hierbei kann beispielsweise die Positioniernut als Ringnut ausgebildet sein. Der Vorsprung an den Hydraulikschläuchen ist beispielsweise ein ringförmiger Vorsprung, beispielsweise ein umlaufender Wulst. Die Positioniernut verhindert somit eine Axialverschiebung der Hydraulikschläuche durch geometrisches Zusammenwirken mit dem Umfang oder Teilumfang der Hydraulikschläuche. Auch ist es umgekehrt möglich, dass die Hydraulikschläuche eine negative Aufnahmegeometrie aufweisen und die Schlauchsicherung einen Vorsprung aufweist.

Alternativ oder zusätzlich zu einer Positioniernut kann die Schlauchsicherung eine erste Anschlagsgeometrie und eine zweite Anschlagsgeometrie aufweisen, wobei die erste Anschlagsgeometrie die Hydraulikschläuche in einer ersten Richtung axial fixiert und die zweite Anschlagsgeometrie die Hydraulikschläuche in einer zweiten Richtung axial fixiert.

Die erste und die zweite Anschlagsgeometrie stellen einen mechanischen Anschlag bereit, der mit einem Teil der Hydraulikschläuche zusammenwirken kann. Beispielsweise weisen die Hydraulikschläuche hierfür einen Vorsprung an einer ersten Stelle für die erste Anschlagsgeometrie und einen weiteren Vorsprung an einer zweiten Stelle für die zweite Anschlagsgeometrie auf. Die erste und die zweite Anschlagsgeometrie können beispielsweise voneinander beabstandet angeordnet werden.

Vorteilhafterweise kann vorgesehen sein, dass die Fixiereinrichtung als Führungsblock ausgebildet ist. Hierbei kann der Führungsblock eine Vielzahl von Führungsdurchlässen aufweisen, wobei jeder Führungsdurchlass bevorzugt zur Aufnahme eines einzigen Hydraulikschlauches ausgebildet ist. Bei dieser Ausführungsform können mehrere Hydraulikschläuche geführt werden, die jeweils axial fixiert sind und in dem Führungsdurchlass frei rotieren können. Hierfür sind die Führungsdurchlässe beispielsweise so ausgelegt, dass ihr Durchmesser größer ist als ein Außendurchmesser der zu führenden Hydraulikschläuche. Es können zylindrische Führungsdurchlässe im Inneren der Führungseinrichtung parallel zueinander verlaufen.

Es können zur Herstellung der Formschlussverbindung Schlauchschellen auf die Hydraulikschläuche aufgesetzt werden. Wenn die Schlauchschellen mit einem oder mehreren Anschlägen am Fahrzeug zusammenwirken, können sich die Hydraulikschläuche frei drehen und sind dennoch in Längsrichtung ortsfest geführt.

Mit Vorteil kann vorgesehen werden, dass die Fixiereinrichtung einen abnehmbaren Teil zum Einlegen mindestens eines Hydraulikschlauchs oder mehrerer Hydraulikschläuche aufweist. Auf diese Weise wird die Installation der Hydraulikschläuche in der Führungseinrichtung erleichtert. Man erspart sich ein Einfädeln der Hydraulikschläuche in die Führungseinrichtung.

Nachfolgend wird die Erfindung anhand von Ausführungsbeispielen weiter erläutert. In den Zeichnungen zeigen schematisch:
- Fig. 1: ein Ausführungsbeispiel einer Straßenwalze;
- Fig. 2: ein Detail der Straßenwalze gemäß Fig. 1;
- Fig. 3: weitergehende Details gemäß Fig. 2; und
- Fig. 4: ein Ausführungsbeispiel einer Schlauchführung.

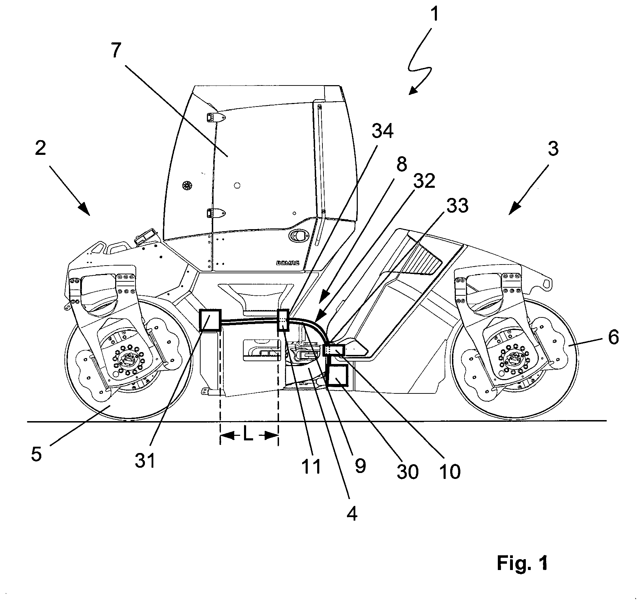

Fig. 1 veranschaulicht eine Baumaschine 1 in Form einer pendel-/knickgelenkten Straßenwalze mit einem Vorderwagen 2 und einem Hinterwagen 3, die über ein Pendel-/Knickgelenk 4 miteinander verbunden sind. Am Vorderwagen 2 sind eine vordere Bandage 5 und am Hinterwagen 3 eine hintere Bandage 6 angeordnet. Die Straßenwalze 1 ist ferner mit einer Fahrerkabine 7 auf dem Vorderwagen 2 versehen.

Zwischen dem Vorderwagen 2 und dem Hinterwagen 3 verlaufen flexible Hydraulikschläuche 9, welche eine Überbrückungsstelle 8 zwischen Vorderwagen 2 und Hinterwagen 3 frei tragend überbrücken. Die Hydraulikschläuche 9 verbinden verschiedene Hydraulikvorrichtungen, wie beispielsweise Pumpen 30 und Hydraulikmotoren 31 oder Stellvorrichtungen, auf dem Hinterwagen 3 und Vorderwagen 2. Sie werden in der Überbrückungsstelle 8 in einem vertikal verlaufenden Schlauchbogen 32 frei tragend über dem Pendel-/Knickgelenk 4 geführt, so dass sie Pendel- und Knickbewegungen des Vorderwagens 2 und des Hinterwagens 3 ausgleichen können. Innerhalb des Vorderwagens 2 verlaufen die Hydraulikschläuche 9 über eine Ausgleichslänge L weitgehend ohne Biegungen und enden an den Hydraulikmotoren 31. Zur Vereinfachung der Darstellung sind in der Fig. 1 auch diejenigen Teile der Hydraulikschläuche 9 und die Hydraulikvorrichtungen sichtbar wiedergegeben, die unter einer Karosserie der Baumaschine 1 liegen. Die beiden Enden des Schlauchbogens 32 befinden sich auf unterschiedlichen Höhen an der Baumaschine 1, wobei das hinterwagenseitige Ende 33 tiefer liegt als das vorderwagenseitige Ende 34. Der Abschnitt des Schlauchbogens 32 auf Seiten des Hinterwagens 2 verläuft somit im Wesentlichen vertikal, und der in den Vorderwagen mündende Abschnitt des Schlauchbogens 32 verläuft somit im Wesentlichen horizontal. Insgesamt bildet der Schlauchbogen 32 in dem dargestellten Ausführungsbeispiel ungefähr ein Viertelkreissegment.

Zu beiden Seiten der Überbrückungsstelle 8, d.h. an den beiden Enden 33, 34 des Schlauchbogens 32, sind die Hydraulikschläuche 9 in ihrer Lage fixiert. Außerdem sind sie auf einer Seite, hier auf Seiten des Hinterwagens 3, in einer Fixiereinrichtung 10 fest eingespannt, so dass sie weder axial verschiebbar noch rotatorisch um ihre eigene Achse bewegbar sind. Auf der anderen Seite, hier auf Seiten des Vorderwagens 2, sind die Hydraulikschläuche 9 in einer Führungseinrichtung 11 so fixiert, das sie sich axial nicht verschieben können, aber eine Drehung um sich selbst möglich ist.

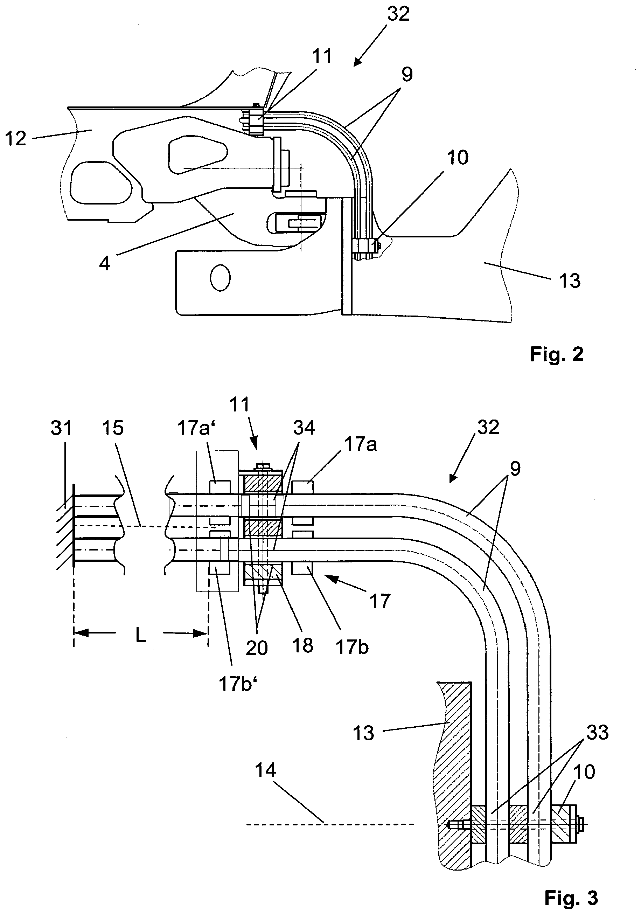

Fig. 2 und Fig. 3 zeigen jeweils schematisch einen Ausschnitt der Baumaschine 1 der Fig. 1 im Bereich der Überbrückungsstelle 8 und des Pendel-/Knickgelenks 4, wobei in Fig. 2 und Fig. 3 lediglich Teilbereiche des Vorderwagens 2 und des Hinterwagens 3 dargestellt sind. Ferner zeigen die Fig. 2 und 3 einen Teil der Hydraulikschläuche 9, in diesem Ausführungsbeispiel zwei Hydraulikschläuche 9.

Die Führungseinrichtung 11 ist an einem Vorderrahmen 12 des Vorderwagens 2 angeordnet. Die Fixiereinrichtung 10 ist an einem Heckrahmen 13 des Hinterwagens 3 angeordnet. Bei der Installation der Fixiereinrichtung 10 und der Führungseinrichtung 11 sind folgende Abmessungen typisch. Ein horizontaler Abstand zwischen der Führungseinrichtung 11 und der Fixiereinrichtung 10 beträgt beispielsweise 30 bis 50 cm. Die Ausgleichslänge L der Hydraulikschläuche 9 von der Führungseinrichtung 11 zu den Hydraulikmotoren 31 kann beispielsweise 50 cm bis 100 cm betragen. Die Ausgleichslänge L entspricht dem Abstand der Führungseinrichtung 11 zur nächsten axialen und rotatorischen Fixierung der Hydraulikschläuche 9, was im vorliegenden Beispiel einer axialen und rotatorischen Fixierung an den Hydraulikmotoren 31 entspricht. Die Ausgleichslänge L ist so bemessen, dass sich eine Torsion der Hydraulikschläuche 9, die im Bereich des Pendel-/Knickgelenks 4 verursacht wird, über die gesamte Ausgleichslänge L ausgleichen kann, und daher im Bereich des Schlauchbogens 32 zwischen der Fixiereinrichtung 10 und der Führungseinrichtung 11 nicht zur Wirkung kommt.

In Fig. 3 sind weitere Einzelheiten zur Führung der Hydraulikschläuche 9 vom Hinterwagen 3 zum Vorderwagen 2 über die Überbrückungsstelle 8 dargestellt. Am Heckrahmen 13 ist die Fixiereinrichtung 10 angeordnet, die die Hydraulikschläuche 9 rotatorisch und axial fixiert. Diese Fixierung wird durch an sich bekannte Klemmmittel, beispielsweise Schlauchschellen, erreicht, so dass sich die Hydraulikschläuche 9 weder in Schlauchumfangsrichtung noch in Schlauchaxialrichtung bewegen können. Die Hydraulikschläuche 9 sind somit an dieser Stelle in allen Freiheitsgraden fixiert. Der Fixierungsort liegt in einer ersten Höhe 14, von der die Hydraulikschläuche 9 über den Schlauchbogen 32 zu der Führungseinrichtung 11 am Vorderrahmen 12 in eine zweite Höhe 15 geführt werden. Die erste Ebene 14 liegt näher an der Bodenoberfläche 16 als die zweite Ebene 15, so dass die Fixiereinrichtung 10 niedriger als die Führungseinrichtung 11 installiert ist. Die Hydraulikschläuche 9 werden somit in zwei verschiedene Höhen 14, 15 zu beiden Seiten der Überbrückungsstelle 8 gehalten, wobei der Höhenausgleich im Schlauchbogen 32 erfolgt.

Die Führungseinrichtung 11 weist gemäß Fig. 3 eine blockförmigen Schlauchführung 18 auf, der am Vorderwagen oberhalb des Pendel-/Knickgelenks 4 ortsfest angebracht ist. Er ist mit parallelen, horizontalen und zylindrischen Durchgängen 20 versehen, die jeweils einen der Hydraulikschläuche 9 aufnehmen. Die Durchmesser der Durchgänge 20 sind größer als die Außendurchmesser der sie durchdringenden Hydraulikschläuche 9, so dass sich die Hydraulikschläuche 9 in den Durchgängen 20 um sich selbst drehen können.

Ferner weist die Führungseinrichtung 11 eine formschlüssige axiale Schlauchsicherung 17 auf, welche die Hydraulikschläuche 9 in ihrer axialen Richtung fixiert, das heißt in Längsrichtung der Hydraulikschläuche 9 unbeweglich hält, ohne eine Drehung der Schläuche 9 um ihre eigene Achse zu verhindern, d.h. sie lässt eine Rotationsbewegung der Hydraulikschläuche 9 in ihrer Umfangsrichtung zu. Die Schlauchsicherung 17 ist in Fig. 3 durch Anschläge 17a, 17a', 17b, 17b' gebildet, die paarweise zu beiden Seiten der Schlauchführung 18 auf die Schläuche 19 verschiebefest aufgesetzt sind. Jeweils ein Teil 17a, 17b bzw. 17a', 17b' eines Paares ist auf gegenüberliegenden Seiten der Schlauchführung 18 angeordnet. Die Anschläge 17a, 17a', 17b, 17b' der Schlauchsicherung 17 weisen einen größeren Durchmesser auf als die Durchgänge 20. Die Schlauchführung 18 wirkt als Gegenanschlag für die Anschläge 17a, 17a', 17b, 17b' der Schlauchsicherung 17, wenn die Hydraulikschläuche 9 einer axialen Zugkraft in die eine oder andere Richtung ausgesetzt werden. Wenn im Einzelfall nur eine Zugkraft in einer Richtung auftreten kann, genügt die Anordnung von Anschlägen 17a, 17a', 17b, 17b' an einer Seite der Schlauchführung 18. Im einfachsten Fall bestehen die Anschläge 17a, 17a', 17b, 17b' der Schlauchsicherung 17 aus an sich bekannten Schlauchklemmen oder Schlauchklammern. Alternativ können sie auch als Ringe o.ä ausgeführt sein, die auf die Hydraulikschläuche 9 aufgeklebt oder aufvulkanisiert sind.

Auf diese Weise können alle Hydraulikschläuche 9 in der Führungseinrichtung 11 frei von Torsionskräften gehalten werden. Torsionsbewegungen an den Hydraulikschläuchen 9, die durch eine Bewegung des Pendel-/Knickgelenks 4 bzw. des Vorder- und Hinterwagens 2, 3 relativ zueinander entstehen, können durch die Führungseinrichtung 11 hindurch entlang der Ausgleichslänge L weitergegeben werden, so dass sich eine Torsion auf die gesamte freie Länge der Hydraulikschläuche 9 von der Fixiereinrichtung 10 bis hin zu den Hydraulikmotoren 31 verteilt und im Bereich des Schlauchbogens 32 vernachlässigbar wird.

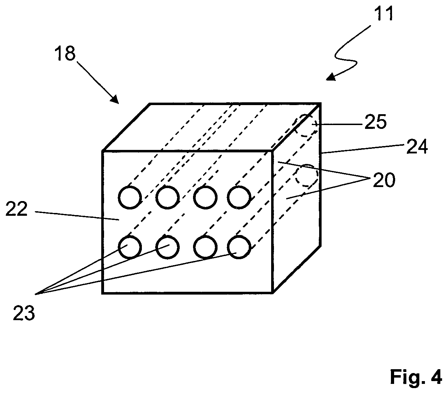

Fig. 4 veranschaulicht die Schlauchführung 18 in perspektivischer Ansicht. Die zylindrischen Durchgänge 20 im Inneren der Schlauchführung 18 sind für einige Hydraulikschläuche 9 durch strichlierte Linien angedeutet. An einer Seite 22 der Schlauchführung 18 befinden sich Eintrittsöffnungen 23 und an der gegenüberliegenden Seite 24 sind Austrittsöffnungen 25 der zylindrischen Durchgänge 20 angeordnet.

## Patentansprüche

1. Pendel-/knickgelenkte Baumaschine (1) aufweisend
einen Vorderwagen (2), einen Hinterwagen (3), wobei der Vorderwagen (2) und der Hinterwagen (3) über ein Pendel-/Knickgelenk (4) verbunden sind, wobei ferner das Pendel-/Knickgelenk (4) frei tragend überbrückende Hydraulikschläuche (9) zwischen dem Vorderwagen (2) und dem Hinterwagen (3) aufweist, wobei die Hydraulikschläuche (9) an beiden Seiten der Überbrückungsstelle (8) ortsfest fixiert sind, wobei die Hydraulikschläuche (9) auf einer Seite der Überbrückungsstrecke (8) mit einer Fixiereinrichtung (10) bezüglich einer rotatorischen und axialen Bewegung fixiert sind, und **dadurch gekennzeichnet, dass** die Hydraulikschläuche auf der anderen Seite der Überbrückungsstrecke (8) mit einer Führungseinrichtung (11) in axialer Richtung fixiert und rotatorisch frei beweglich sind, und dass die Hydraulikschläuche (9) auf der der Fixiereinrichtung (10) abgewandten Seite der Führungseinrichtung (11) eine vorgegebene Ausgleichslänge (L) aufweisen, in welcher sie sich ungehindert in sich verdrehen können, um eventuelle Torsionsbewegungen über diese Ausgleichslänge (L) verteilen zu können.

2. Pendel-/knickgelenkte Baumaschine (1) nach Anspruch 1,
**dadurch gekennzeichnet,**
**dass** die axiale Fixierung in der Führungseinrichtung (11) bei gleichzeitiger rotatorischer Freiheit der Hydraulikschläuche (9) durch formschlüssige Fixiermittel erfolgt.

3. Pendel-/knickgelenkte Baumaschine (1) nach Anspruch 2,
**dadurch gekennzeichnet,**
**dass** der Formschluss durch einen oder mehrere Anschläge auf den Hydraulikschläuchen (9) hergestellt wird, welche mit korrespondierenden fahrzeugseitigen Gegenanschlägen zusammenwirken.

4. Pendel-/knickgelenkte Baumaschine (1) nach Anspruch 2,
**dadurch gekennzeichnet,**
**dass** die Anschläge und Gegenanschläge einerseits durch Schlauchklemmen hergestellt sind, welche auf den Hydraulikschläuchen (9) angeordnet sind, und andererseits durch eine fahrzeugseitige, ortsfeste Schlauchsicherung (17).

5. Pendel-/knickgelenkte Baumaschine (1) nach Anspruch 2,
**dadurch gekennzeichnet,**
**dass** die Anschläge und Gegenanschläge durch die Kombination einer Nut und eines korrespondierenden Anschlags bereitgestellt werden.

6. Pendel-/knickgelenkte Baumaschine (1) nach einem der vorhergehenden Ansprüche,
**dadurch gekennzeichnet,**
**dass** die Hydraulikschläuche (9) in der Überbrückungsstelle (8) als vertikal verlaufender Schlauchbogen (32) angeordnet sind.

7. Pendel-/knickgelenkte Baumaschine (1) nach Anspruch 6,
**dadurch gekennzeichnet,**
**dass** die beiden Enden des Schlauchbogens (32) in unterschiedlichen Höhen am Vorderwagen (2) bzw. Hinterwagen (3) angeordnet sind.

8. Pendel-/knickgelenkte Baumaschine (1) nach einem der vorhergehenden Ansprüche,
**dadurch gekennzeichnet,**
**dass** die Führungseinrichtung (11) als Schlauchführung (18) ausgebildet ist, die eine Vielzahl von Schlauchdurchgängen (20) aufweist, deren Durchmesser größer ist als der Außendurchmesser der Hydraulikschläuche (9), wobei jeder Schlauchdurchgang (20) zur Aufnahme eines der Hydraulikschläuche (9) ausgebildet ist.

## Claims

1. Pendulum/pivot-joint articulated construction machine (1), comprising a front body (2), a rear body (3), wherein the front body (2) and the rear body (3) are connected via an pendulum/pivot joint (4), wherein further the pendulum/pivot joint (4) comprises hydraulic hoses (9) that span the space between the front body (2) and the rear body (3) in a self-supporting manner, wherein the hydraulic hoses (9) are fixed in a stationary manner on both sides of the bridging location (8),
wherein the hydraulic hoses (9) are fixed with a fixing device (10) on one side of the bridging segment (8) with respect to a rotational and axial movement, and **characterized in that** the hydraulic hoses (9) are fixed on the other side of the bridging segment (8) in the axial direction with a guiding device (11) and are freely rotatable, and that the hydraulic hoses (9) on the side of the guiding device (11) facing away from the fixing device (10) have a predetermined compensation length (L), in which they can twist in an unimpeded manner in order to be able to distribute any torsional movements over this compensation length (L).

2. Pendulum/pivot-joint articulated construction machine (1) according to claim 1,
**characterized in that**
the axial fixing in the guiding device (11) occurs via form-fit fixing means while maintaining the rotational freedom of the hydraulic hoses (9).

3. Pendulum/pivot-joint articulated construction machine (1) according to claim 2,
**characterized in that**
the form fit is established by means of one or multiple stops on the hydraulic hoses (9), which engage with corresponding counter-stops on the side of the vehicle.

4. Pendulum/pivot-joint articulated construction machine (1) according to claim 2,
**characterized in that**
the stops and counter-stops are established both by means of hose clamps that are arranged on the hydraulic hoses (9) as well as by means of a stationary hose securing means (17) on the side of the vehicle.

5. Pendulum/pivot-joint articulated construction machine (1) according to claim 2,
**characterized in that**
the stops and counter-stops are provided by means of the combination of a groove and a corresponding stop.

6. Pendulum/pivot-joint articulated construction machine (1) according to one of the preceding claims,
**characterized in that**
the hydraulic hoses (9) are arranged in the bridging location (8) as a vertically extending hose arch (32).

7. Pendulum/pivot-joint articulated construction machine (1) according to claim 6,
**characterized in that**
the two ends of the hose arch (32) are arranged at different heights on the front body (2) or rear body (3).

8. Pendulum/pivot-joint articulated construction machine (1) according to one of the preceding claims,
**characterized in that**
the guiding device (11) is configured as a hose guide (18), which comprises a plurality of hose passages (20), the diameter of which is greater than the outer diameter of the hydraulic hoses (9), wherein each hose passage (20) is configured to receive one of the hydraulic hoses (9).

## Revendications

1. Engin de chantier (1) articulé pendulaire/à pivot, comprenant :
un corps avant (2), un corps arrière (3), dans lequel le corps avant (2) et le corps arrière (3) sont reliés via une articulation pendulaire/à pivot (4), dans lequel en outre l'articulation pendulaire/à pivot (4) comprend des tuyaux hydrauliques (9) qui traversent l'espace entre le corps avant (2) et le corps arrière (3) de manière autoportante, dans lequel les tuyaux hydrauliques (9) sont fixés de manière stationnaire des deux côtés de l'emplacement de traversée (8),
dans lequel les tuyaux hydrauliques (9) sont fixés avec un dispositif de fixation (10) sur un premier côté du segment de traversée (8) en relation avec un mouvement rotatif et axial, et ***caractérisé en ce que*** les tuyaux hydrauliques (9) sont fixés sur l'autre côté du segment de traversée (8) dans la direction axiale avec un dispositif de guidage (11) et sont librement rotatifs, et ***en ce que*** les tuyaux hydrauliques (9) sur le côté du dispositif de guidage (11) à l'opposé du dispositif de fixation (10) ont une longueur de compensation prédéterminée (L), dans laquelle ils peuvent se tordre librement de manière à être aptes à répartir tous les mouvements de torsion sur cette longueur de compensation (L).

2. Engin de chantier (1) articulé pendulaire/à pivot selon la revendication 1,
***caractérisé en ce que***
la fixation axiale dans le dispositif de guidage (11) est obtenue via des moyens de fixation par complémentarité de formes tout en conservant la liberté de rotation des tuyaux hydrauliques (9).

3. Engin de chantier articulé (1) pendulaire/à pivot selon la revendication 2,
***caractérisé en ce que***
la complémentarité de formes est obtenue au moyen d'une ou plusieurs butées sur les tuyaux hydrauliques (9), qui s'engagent avec des contre-butées correspondantes sur le côté du véhicule.

4. Engin de chantier articulé (1) pendulaire/à pivot selon la revendication 2,
***caractérisé en ce que***
les butées et les contre-butées sont toutes deux réalisées au moyen de colliers de serrage qui sont disposés sur les tuyaux hydrauliques (9) ainsi qu'avec un moyen d'assujettissement de tuyau fixe (17) sur le côté du véhicule.

5. Engin de chantier articulé (1) pendulaire/à pivot selon la revendication 2,
***caractérisé en ce que***
les butées et les contre-butées sont réalisées au moyen d'une combinaison d'une rainure et d'une butée correspondante.

6. Engin de chantier articulé (1) pendulaire/à pivot selon l'une quelconque des revendications précédentes,
***caractérisé en ce que***
les tuyaux hydrauliques (9) sont agencés dans l'emplacement de traversée (8) selon un coude (32) s'étendant verticalement.

7. Engin de chantier articulé (1) pendulaire/à pivot selon la revendication 6,
***caractérisé en ce que***
les deux extrémités du coude (32) de tuyaux sont disposées à différentes hauteurs sur le corps avant (2) ou le corps arrière (3).

8. Engin de chantier articulé (1) pendulaire/à pivot selon l'une quelconque des revendications précédentes,
***caractérisé en ce que***
le dispositif de guidage (11) est un guide-tuyaux (18) qui comprend une pluralité de passages (20) pour des tuyaux, dont le diamètre est supérieur au diamètre extérieur des tuyaux hydrauliques (9), chaque passage (20) pour tuyau étant configuré pour recevoir un des tuyaux hydrauliques (9).
